# EUROPÄISCHE PATENTSCHRIFT

(11) **EP 3 164 591 B1**
(45) Veröffentlichungstag und Bekanntmachung des Hinweises auf die Patenterteilung: **02.11.2022**
(21) Anmeldenummer: 15730485.8
(22) Anmeldetag: 18.06.2015
(51) Int. Cl.: F02M 26/00

(54) **REGELVENTIL ZUM ANBAU AN EINEN KFZ-MOTOR**
CONTROL VALVE FOR INSTALLATION ON A MOTOR VEHICLE ENGINE
SOUPAPE DE COMMANDE DESTINÉE À ÊTRE MONTÉE SUR UN MOTEUR DE VÉHICULE AUTOMOBILE

(30) Priorität: 02.07.2014 DE 102014109273
(43) Veröffentlichungstag der Anmeldung: 10.05.2017
(73) Patentinhaber: Pierburg GmbH, 41460 Neuss (DE)
(72) Erfinder: REIMERS, Thorsten, 41472 Neuss (DE); KÖNIG, Dietmar, 51063 Köln (DE); VIERKOTTEN, Dirk, 53804 Much (DE)
(74) Vertreter: terpatent Patentanwälte ter Smitten Eberlein-Van Hoof Rütten Daubert
(86) Internationale Anmeldenummer: PCT/EP2015/063664
(87) Internationale Veröffentlichungsnummer: WO 2016/000969

(56) Entgegenhaltungen:
- WO-A1-03/021087
- FR-A1- 2 902 470
- FR-A1- 2 944 333
- US-A1- 2003 098 066
- US-A1- 2003 116 193

## Beschreibung

Die Erfindung betrifft ein Regelventil zum Anbau an einen Kfz-Motor mit einem Gehäuse, das eine Einlass- und eine Auslassöffnung aufweist, zwischen denen ein Ventilsitz angeordnet ist, der derart mit einem Ventilverschlusskörper zusammenwirkt, dass eine fluidische Verbindung zwischen Einlass- und Auslassöffnung trenn- oder herstellbar ist, wobei der Ventilverschlusskörper sich an eine Ventilstange anschließt, die in einem Ventilführungsorgan im Gehäuse gelagert ist und durch eine Aktuatoreinrichtung bewegbar ist, wobei im Bereich des Ventilführungsorgans eine Heizvorrichtung mit mindestens einem Heizorgan vorgesehen ist.

Derartige Regelventile sind aus dem Stand der Technik hinlänglich bekannt. Sie werden beispielsweise als Abgasrückführ- oder auch Sekundärluftventile im Kraftfahrzeug verbaut. Der Einbau im Kraftfahrzeug bedingt eine Funktion unter den unterschiedlichsten Umweltbedingungen. So können beispielsweise Schmutz- oder auch Abgaspartikel zu einem Verkleben bzw. Zusetzen der Ventilführung führen. Auch kann es bei besonders niedrigen Außentemperaturen zu einem Festfrieren der Ventilstange kommen. Um diese Nachteile wirkungsvoll zu verhindern, ist es aus der FR 2 944 333 bekannt, um eine Führungs- bzw. Lagerhülse herum ein ringförmiges Element mit Heizdrähten vorzusehen, die an einen Stromkreis angeschlossen sind. Aus der US 2003/0098066 A1 ist eine weitere Ausgestaltung eines Regelventils bekannt, welches eine zusätzliche, separate Heizvorrichtung aufweist, wobei die Heizvorrichtung die Ventilstange radial umgibt und sich aus einem Heizkörper sowie mehreren in dem Heizkörper angeordneten Heizelementen zusammensetzt. Derartige Ausführungsformen sind sehr aufwendig und daher teuer im konstruktiven Aufbau.

Aufgabe der Erfindung ist es daher, den oben genannten Nachteil zu vermeiden und ein Regelventil bereitzustellen, das einen einfachen und damit kostengünstigen sowie widerstandsfähigen Aufbau aufweist.

Diese Aufgabe wird dadurch gelöst, dass das mindestens eine Heizorgan im Ventilführungsorgan vorgesehen ist, wobei als Heizorgan ein Feststoffheizelement in Form eines PTC-Heizelements vorgesehen ist, das das Ventilführungsorgan bildet. Hierdurch könnte ein Bauteil eingespart werden. Gleichzeitig wird das Auftreten von Koaxialfehlern minimiert. Auch kann ein direkterer Wärmeübergang zwischen Ventilstange und Ventilführungsorgan stattfinden, wodurch die Heizvorrichtung hinsichtlich der Heizleistung geringer ausgelegt werden kann.

In einer besonders vorteilhaften Ausführungsform ist eine elektrische Kontaktierung an den Axialenden des Ventilführungsorgans jeweils mittels einer Kontaktplatte vorgesehen. Auf diese Weise ist eine besonders widerstandsfähige und sichere Konstruktion vorgesehen, die an die besonderen Randbedingungen im Kfz-Bereich angepasst ist

Die Erfindung wird anhand einer Zeichnung näher erläutert, hierbei zeigt:
Figur 1 ein erfindungsgemäßes Regelventil in teilweise geschnittener Ansicht, und
Figur 2 eine Ausführungsform eines Ventilführungsorgans.

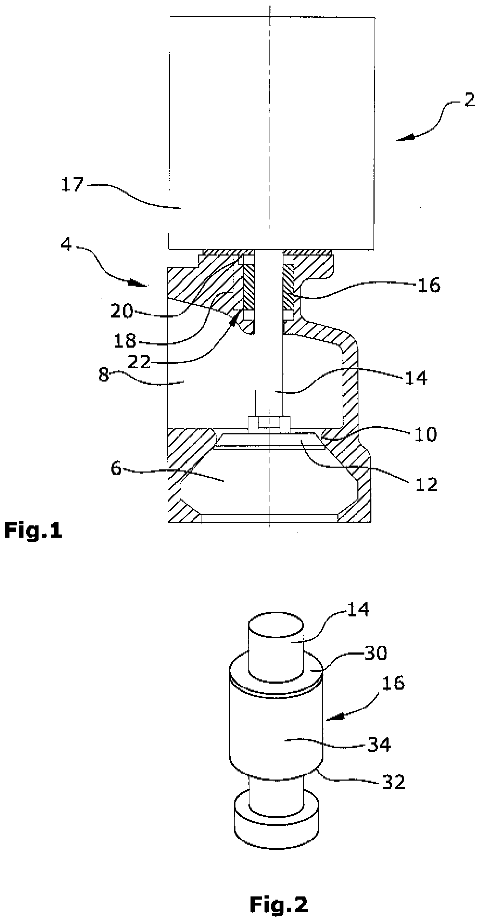

Figur 1 zeigt in teilweise geschnittener Ansicht ein Regelventil 2, das hier als Abgasrückführventil ausgeführt ist. Es sollte jedoch deutlich sein, dass die Erfindung nicht Abgasrückführventile beschränkt ist, sondern auch weitere Regelventile im Kfz-Bereich, wie Sekundärluftventil, Waste-Gate-Ventile, etc., umfasst. Das hier dargestellte Abgasrückführventil 2 weist ein Gehäuse 4 auf, das eine Einlassöffnung 6 und eine Auslassöffnung 8 besitzt. Zwischen der Einlassöffnung 6 und der Auslassöffnung 8 ist ein Ventilsitz 10 angeordnet, der derart mit einem Ventilverschlusskörper 12 zusammenwirkt, dass die Einlassöffnung 6 von der Auslassöffnung 8 getrennt werden kann oder auch fluidisch mit dieser verbunden werden kann. Der Ventilverschlusskörper 12 ist auf bekannte Weise an einer Ventilstange 14 angeordnet, wobei die Ventilstange 14 in einem im Gehäuse 4 vorgesehenen Ventilführungsorgan 16 beweglich gelagert ist. Des Weiteren ist die Ventilstange 14 mit einer schematisch dargestellten Aktuatoreinrichtung 17 derart wirkverbunden, dass die Ventilstange 14 in Axialrichtung bewegbar ist. Die Aktuatoreinrichtung 17 kann jegliche Art von Antriebseinrichtung sein. Im vorliegenden Fall handelt es sich um eine elektromotorische Aktuatoreinrichtung 17, die auf bekannte Weise mit einer nicht weiter dargestellten Motorsteuerung elektrisch verbunden ist. Wie noch näher in der Figur 2 dargestellt wird, ist in dem Ventilführungsorgan 16 mindestens ein Heizorgan 28 oder 34 vorgesehen, das zusammen mit elektrischen Leitungen 18, 20 eine Heizvorrichtung 22 bildet. Die elektrischen Leitungen 18, 20 führen in die Aktuatoreinrichtung 17 und sind dort mit dem nicht weiter dargestellten Motorsteuergerät verbunden. Hierdurch kann auf einfache Art und Weise ein Festsitzen, beispielsweise durch gefrorene Flüssigkeiten, durch eine Erwärmung vor der Ventilbetätigung behoben werden.

Figur 2 zeigt nun in schematischer, perspektivischer Ansicht eine zweite Ausführungsform des Ventilführungsorgans 16. Hier besteht das Ventilführungsorgan 16 an sich aus einem PTC-Keramikkörper 34, der an seinen Axialenden durch die aus Figur 2 bekannten Kontaktplatten 30, 32 abgeschlossen und mit den elektrischen Leitungen 18, 20 verbunden ist. Der PTC-Keramikkörper 34 wird hierbei in seiner Gesamtheit erwärmt und führt somit im Bedarfsfall zu einer Lösung der Ventilstange 14. Auch die in Radialrichtung verlaufende Oberfläche des PTC-Keramikkörpers 34 wird durch ein geeignetes, hier nicht weiter dargestelltes Isolationsmaterial abgedeckt.

## Patentansprüche

1. Regelventil (2) zum Anbau an einen Kfz-Motor mit einem Gehäuse (4), das eine Einlass (6)- und eine Auslassöffnung (8) aufweist, zwischen denen ein Ventilsitz angeordnet ist, der derart mit einem Ventilverschlusskörper zusammenwirkt, dass eine fluidische Verbindung (10) zwischen Einlass (6)- und Auslassöffnung (8) trenn- oder herstellbar ist, wobei der Ventilverschlusskörper (12) sich an eine Ventilstange (14) anschließt, die in einem Ventilführungsorgan (16) im Gehäuse (4) gelagert ist und durch eine Aktuatoreinrichtung (17) bewegbar ist, wobei im Bereich des Ventilführungsorgans (16) eine Heizvorrichtung (22) mit mindestens einem Heizorgan (28, 34) vorgesehen ist, **dadurch gekennzeichnet, dass** das mindestens eine Heizorgan (28, 34) im Ventilführungsorgan (16) vorgesehen ist, wobei als Heizorgan ein PTC-Heizelement (34) vorgesehen ist, das das Ventilführungsorgan (16) bildet.

2. Regelventil nach Anspruch 1, **dadurch gekennzeichnet, dass** eine elektrische Kontaktierung an den Axialenden des Ventilführungsorgans (16) jeweils mittels einer Kontaktplatte (30, 32) vorgesehen ist.

## Claims

1. Control valve (2) for mounting on a motor vehicle engine, having a housing (4) which comprises an inlet opening (6) and an outlet opening (8), between which a valve seat is arranged which interacts with a valve closure body in such a way that a fluidic connection (10) between the inlet opening (6) and the outlet opening (8) can be separated or provided, wherein the valve closure body (12) adjoins a valve stem (14) which is mounted in a valve guide member (16) in the housing (4) and can be moved by an actuator device (17), wherein a heating device (22) having at least one heating member (28, 34) is provided in the region of the valve guide member (16), wherein the at least one heating member (28, 34) is provided in the valve guide member (16), wherein a PTC heating element (34), which forms the valve guide member (16), is provided as the heating member.

2. Control valve according to claim 1, wherein electrical contacting is provided at the axial ends of the valve guide member (16) in each case by means of a contact plate (30, 32).

## Revendications

1. Valve de régulation (2) destinée à être montée sur un moteur de véhicule automobile, qui comporte un boîtier (4) avec un orifice d'entrée (6) et un orifice de sortie (8) entre lesquels est disposé un siège de vanne qui coopère avec un corps de fermeture de soupape de telle sorte qu'une connexion fluidique (10) peut être séparée ou établie entre l'orifice d'entrée (6) et l'orifice de sortie (8), le corps de fermeture de soupape (12) se raccordant à une tige de soupape (14), qui est logée dans un organe de guidage de soupape (16) dans le boîtier (4) et qui peut être déplacée par un dispositif actionneur (17), un dispositif de chauffage (22) avec au moins un organe de chauffage (28, 34) est prévu dans la zone de l'organe de guidage de soupape (16), **caractérisée en ce que** le au moins un organe de chauffage (28, 34) est prévu dans l'organe de guidage de soupape (16), un élément de chauffage PTC (34) étant prévu comme organe de chauffage, lequel forme l'organe de guidage de soupape (16).

2. Valve de régulation selon la revendication 1, **caractérisée en ce qu'**une mise en contact électrique est prévue aux extrémités axiales de l'organe de guidage de valve (16) respectivement au moyen d'une plaque de contact (30, 32).
